# EUROPÄISCHE PATENTSCHRIFT

(11) **EP 1 394 198 B1**
(45) Veröffentlichungstag und Bekanntmachung des Hinweises auf die Patenterteilung: **21.04.2004**
(21) Anmeldenummer: 03015655.8
(22) Anmeldetag: 17.07.2003
(51) Int. Cl.: C08K 5/00, C08L 83/00, C08J 3/22

(54) **Hydrophob modifizierte Polymerisate**
Hydrophobically modified polymers
Polymères hydrophobes modifiés

(30) Priorität: 25.07.2002 DE 10233933
(43) Veröffentlichungstag der Anmeldung: 03.03.2004
(73) Patentinhaber: Wacker Polymer Systems GmbH & Co. KG, 84489 Burghausen (DE)
(72) Erfinder: Bastelberger, Thomas, Dr., 84547 Emmerting (DE); Härzschel, Reinhard, Dr., 84489 Burghausen (DE); Jodlbauer, Franz, 84533 Marktl (DE)
(74) Vertreter: Schuderer, Michael, Dr.

(56) Entgegenhaltungen:
- EP-A- 0 913 425
- EP-A- 1 120 384
- WO-A-00/32684
- WO-A-85/03511
- US-A- 5 753 733
- US-A- 5 763 508
- US-A- 5 959 017
- US-B1- 6 379 751
- PATENT ABSTRACTS OF JAPAN vol. 1999, no. 05, 31. Mai 1999 (1999-05-31) & JP 11 043417 A (SHISEIDO CO LTD), 16. Februar 1999 (1999-02-16)

## Beschreibung

Die Erfindung betrifft hydrophob modifizierte Polymerisate in Form deren wässrigen Polymerdispersionen und in Wasser redispergierbaren Polymerpulver.

Wässrige Dispersionen und in Wasser redispergierbare Pulver auf der Basis von Homo- oder Copolymerisaten von ethylenisch ungesättigten Monomeren sind bekannt. Sie werden im Baubereich als Bindemittel, gegebenenfalls in Kombination mit hydraulisch abbindenden Bindemitteln wie Zement, eingesetzt. Beispielsweise in Bauklebern, Putzen, Mörteln und Farben. Aber auch als Bindemittel in Beschichtungsmitteln, Klebemitteln und als Textilbinder. Der Zusatz von Polymerdispersionen oder Dispersionspulvern dient dabei oftmals der Verbesserung der mechanischen Festigkeit und der Haftung. In einigen Anwendungsgebieten, vor allem in Putzen oder Bauklebern, wird häufig neben der Verbesserung der Haftung auch die Reduktion der Wasseraufnahme oder eine wasserabweisende Wirkung verlangt. Um dieses Anforderungsprofil zu erfüllen, werden hydrophobierte Polymerdispersionen oder hydrophobierte Dispersionspulver eingesetzt.

Die WO-A 95/20627 beschreibt hydrophobierte, in Wasser redispergierbare Dispersionspulver, welche als hydrophobierenden Zusatz Organosiliciumverbindungen wie Silane oder Siloxane enthalten. Nachteilig bei mit Silan hydrophobierten Polymerzusammensetzungen ist, dass diese sehr gut auf silikatischen Oberflächen wirken, aber auf Kalk- und Carbonat-haltigen Oberflächen eine Hydrophobierungslücke aufweisen. Die Hydrophobierung von Dispersionspulvern mittels Carbonsäureestern mit Polyhydroxyverbindungen als Alkoholkomponente ist aus der WO-A 02/31036 bekannt. In der EP-A 765898 wird die Herstellung von Baustoffen mit geringem Luftporengehalt mittels Dispersionspulvern beschrieben, welche Fettsäureester enthalten.

Es bestand die Aufgabe, Polymerzusammensetzungen zur Verfügung zu stellen, welche sowohl in Form deren wässrigen Dispersionen, als auch in Form deren in Wasser redispergierbaren Polymerpulver hydrophobierende Wirkung zeigen.

Gegenstand der Erfindung ist eine hydrophob modifizierte Polymerzusammensetzung mit mindestens einem Polymerisat auf der Basis von einem oder mehreren ethylenisch ungesättigten Monomeren, in Form deren wässrigen Polymerdispersionen und in Wasser redispergierbaren Polymerpulver, dadurch gekennzeichnet, dass die Polymerzusammensetzung noch
a) ein oder mehrere Organosilicium-Verbindungen aus der Gruppe der Silane, Polysilane, Oligosiloxane, Polysiloxane, Carbosilane, Polycarbosilane, Carbosiloxane, Polycarbosiloxane, Polysilylendisiloxane, und
b) ein oder mehrere Verbindungen aus der Gruppe der Fettsäuren mit 8 bis 22 C-Atomen, deren Metallseifen, deren Amide, sowie deren Ester mit einwertigen Alkoholen mit 1 bis 8 C-Atomen, mit Glykol, mit Polyglykol, mit Polyalkylenglykol, mit Glycerin, mit Mono-, Di- oder Triethanolamin, mit Monosacchariden, enthält.

Geeignete Organosiliciumverbindungen sind Kieselsäureester Si(OR')₄, Tetraorganosilane SiR₄, Organoorganoxysilane SiRₙ(OR')₄₋ₙ mit n = 1 bis 3, Polysilane der allgemeinen Formel R₃Si(SiR₂)ₙSiR₃ mit n = 0 bis 500, Organosilanole SiRₙ(OH)₄₋ₙ, Di-, Oligo- und Polsiloxane aus Einheiten der allgemeinen Formel R_{c}H_{d}Si(OR')ₑ(OH)_{f}O_{(4-c-d-e-f)/2} mit c = 0 bis 3, d = 0 bis 1, e = 0 bis 3, f = 0 bis 3 und die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Ethyl bedeutet, wobei die Reste R und R' auch mit Halogenen wie Cl, mit Ether-, Thioether-, Ester-, Amid-, Nitril-, Hydroxyl-, Amin-, Carboxyl-, Sulfonsäure-, Carbonsäureanhydrid- und Carbonyl-Gruppen substituiert sein können, und wobei im Fall der Polysilane R auch die Bedeutung OR' haben kann.

Bevorzugt als Komponente a) sind Tetramethoxysilan, Tetraethoxysilan, Methyltripropoxysilan, Methyltri(ethoxyethoxy)silan, Vinyltri(methoxyethoxy)silan, (Meth)acryloxypropyltrimethoxysilan, (Meth)acryloxypropyltriethoxysilan, γ-Chlorpropyltriethoxysilan, β-Nitrilethyltriethoxysilan, γ-Mercaptopropyltrimethoxysilan, γ-Mercaptopropyltriethoxysilan, Phenyltriethoxysilan, Isooctyltriethoxysilan, n-Octyltriethoxysilan, Hexadecyltriethoxysilan, Dipropyldiethoxysilan, Methylphenyldiethoxysilan, Diphenyldimethoxysilan, Methylvinyltri(ethoxyethoxy)silan, Tetramethyldiethoxydisilan, Trimethyltrimethoxydisilan, Trimethyltriethoxydisilan, Dimethyltetramethoxydisilan, Dimethyltetraethoxydisilan, mit Trimethylsiloxygruppen endblockierte Methylhydrogenpolysiloxane, mit Trimethylsiloxygruppen endblockierte Mischpolymere aus Dimethylsiloxan- und Methylhydrogensiloxan-Einheiten, Dimethylpolysiloxane, sowie Dimethylpolysiloxane mit Si-OH-Gruppen in den endständigen Einheiten.

Am meisten bevorzugt werden die Organoorganoxysilane SiRₙ(OR')₄₋ₙ mit n = 1 bis 3, insbesondere Isooctyltriethoxysilan, n-Octyltriethoxysilan, Hexadecyltriethoxysilan. Die Organosiliciumverbindungen können allein und im Gemisch eingesetzt werden. Im allgemeinen wird die Komponente a) in einer Menge von 0.1 bis 20 Gew.-%, vorzugsweise 1 bis 10 Gew.-%, jeweils bezogen auf den Polymerisatanteil, eingesetzt.

Die Herstellung der genannten Organosiliciumverbindungen kann nach Verfahren erfolgen wie sie in Noll, Chemie und Technologie der Silicone, 2. Auflage 1968, Weinheim, und in Houben-Weyl, Methoden der organischen Chemie, Band E20, Georg Thieme Verlag, Stuttgart (1987) beschrieben sind.

Als Komponente b) geeignet sind allgemein Fettsäuren und Fettsäurederivate, die unter alkalischen Bedingungen (pH ≥ 8) Fettsäure bzw. das entsprechende Fettsäureanion freisetzen.

Geeignete Fettsäuren sind verzweigte und unverzweigte, gesättigte und ungesättigte Fettsäuren mit jeweils 8 bis 22 C-Atomen. Beispiele sind Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure). Bevorzugt werden die ungesättigten Fettsäuren, insbesondere die Ölsäure. Geeignete Metallseifen sind die der obengenannten Fettsäuren mit Metallen der 1. bis 3. Hauptgruppe des PSE. Bevorzugt werden Metallseifen mit Lithium, Natrium, Kalium, Magnesium, Calcium und Aluminium, besonders bevorzugt mit ungesättigten Fettsäuren. Geeignete Fettsäureamide sind die mit Mono-, Di- und Triethanolamin und den obengenannten Fettsäuren erhältlichen Fettsäureamide.

Als Komponente b) geeignete Fettsäureester sind die C₁- bis C₈-Alkylester der C₈- bis C₂₂-Fettsäuren, vorzugsweise Methyl-, Ethyl-, Propyl-, Butyl-, Ethylhexyl-Ester. Geeignet sind auch die Mono- und Diglykolester der C₈- bis C₂₂-Fettsäuren. Weitere Beispiele sind die Mono- und Diester von Polyglykolen und/oder Polyalkylenglykolen mit bis zu 12 Oxyalkylen-Einheiten, wie Polyethylenglykol und Polypropylenglykol. Geeignet sind auch die Mono-, Di- und Tri-Fettsäureester des Glycerins mit den C₈- bis C₂₂-Fettsäuren, sowie die Mono-, Di- und Tri-Fettsäureester von Mono-, Di- und Triethanolamin mit den C₈- bis C₂₂-Fettsäuren. Geeignet sind auch die Fettsäureester von Sorbit und Mannit. Besonders bevorzugt sind die Mono- und Diglykolester der Laurinsäure und der Ölsäure, sowie die Mono-, Di- und Tri-Fettsäureester des Glycerins mit der Laurinsäure und der Ölsäure. Am meisten bevorzugt sind die entsprechenden Ester der ungesättigten Fettsäuren wie der Ölsäure.

Die genannten Fettsäuren und Fettsäurederivate können allein oder im Gemisch eingesetzt werden. Im allgemeinen wird die Komponente b) in einer Menge von 0.5 bis 30 Gew.-%, vorzugsweise 1 bis 10 Gew.-%, jeweils bezogen auf den Polymerisatanteil, eingesetzt.

Als ethylenisch ungesättigte Monomere geeignet sind ein oder mehrere Monomere aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, Diene, Olefine, Vinylaromaten und Vinylhalogenide.

Geeignete Vinylester sind solche von Carbonsäuren mit 1 bis 18 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R}, VeoVa10^{R} oder VeoVa11^{R} (Handelsnamen der Firma Resolution). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 18 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 50 Gew.-%, bezogen auf das Gesamtgewicht des Monomergemisches, Hilfsmonomere copolymerisiert werden. Bevorzugt werden 0.5 bis 15 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere, wie mehrfach ethylenisch ungesättigte Comonomere, beispielsweise Divinyladipat, Diallylmaleat, Diallylphthalat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Besonders bevorzugt werden Polymerisate von einem oder mehreren Monomeren aus der Gruppe umfassend Vinylacetat, Vinylester von α-verzweigten Monocarbonsäuren mit 9 bis 13 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien.

Am meisten bevorzugt werden:
Polymerisate von Vinylacetat, gegebenenfalls mit Ethylen;
Polymerisate von Vinylacetat, Ethylen und einem Vinylester von α-verzweigten Monocarbonsäuren mit 9 bis 13 C-Atomen;
Polymerisate von n-Butylacrylat mit 2-Ethylhexylacrylat und/oder Methylmethacrylat;
Polymerisate von Styrol mit einem oder mehreren Monomeren aus der Gruppe Methylacrylat, Ethylacrylat, Propylacrylat, n-Butylacrylat, 2-Ethylhexylacrylat, 1,3-Butadien;
Polymerisate von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen;
wobei die genannten Polymerisate gegebenenfalls noch ein oder mehrere der obengenannten Hilfsmonomereinheiten enthalten können.

Die Monomerauswahl bzw. die Auswahl der Gewichtsanteile der Comonomere erfolgt dabei so, dass im allgemeinen eine Glasübergangstemperatur Tg von -50°C bis +120°C, vorzugsweise - 30°C bis +95°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt:
1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt in an sich bekannter Weise nach dem Emulsionspolymerisationsverfahren oder nach dem Suspensionspolymerisationsverfahren, in Gegenwart von Schutzkolloiden und/oder Emulgatoren. Bevorzugt wird das Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole.

Die Schutzkolloide werden im allgemeinen in einer Menge von insgesamt 1 bis 20 Gew.-%, bezogen auf das Gesamtgewicht der Monomere, bei der Polymerisation zugesetzt. Der Schutzkolloid-Anteil kann sowohl vollständig vorgelegt, als auch teilweise vorgelegt und teilweise zudosiert werden.

Bevorzugt wird ohne Emulgatorzusatz gearbeitet. Gegebenenfalls können die Emulgatoren in einer Menge von 0.1 bis 5 Gew.-%, bezogen auf die Monomermenge, verwendet werden. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Monomere können insgesamt vorgelegt werden, insgesamt zu-. dosiert werden oder in Anteilen vorgelegt werden und der Rest nach der Initiierung der Polymerisation zudosiert werden. Vorzugsweise wird so vorgegangen, daß 50 bis 100 Gew.-%, bezogen auf das Gesamtgewicht der Monomere vorgelegt wird und der Rest zudosiert wird. Die Dosierungen können separat (räumlich und zeitlich) durchgeführt werden oder die zu dosierenden Komponenten können alle oder teilweise voremulgiert dosiert werden.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die wässrigen Polymerdispersionen haben einen Feststoffgehalt von 30 bis 75 Gew.-%, vorzugsweise von 50 bis 60 Gew.-%.

Zur Herstellung der Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Bei der Trocknung zu in Wasser redispergierbaren Polymerpulvern wird in der Regel eine Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Liqninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren.

Die hydrophobierenden Komponenten a) und b) können während der Polymerisation zugegeben werden, oder erst nach der Polymerisation zur Polymerdispersion gegeben werden. Bevorzugt wird die Zugabe nach Abschluß der Polymerisation zur Polymerdispersion. Zur Hydrophobierung von pulverförmigen Zusammensetzungen kann analog vorgegangen werden, wobei nach Zumischung der Komponenten a) und b) zur Polymerdispersion der Trocknungsschritt anschließt. Es kann auch so vorgegangen werden, dass die Komponenten a) und b) in Pulverform während oder nach der Trocknung dem Polymerpulver zugegeben werden. Falls die Komponenten a) oder b) in flüssiger Form vorliegen, kann nach der in der DE-A 19535833 beschriebenen Vorgehensweise zur Modifizierung von Pulvern vorgegangen werden, die flüssigen Komponenten auf einen pulverförmigen Träger aufgebracht werden, und mit diesem Carrier während oder nach der Trocknung zugemischt werden.

Die hydrophob modifizierten Polymerdispersionen und Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement) oder Wasserglas, oder in Gipshaltigen Massen, Kalk-haltigen Massen, oder zementfreien und Kunststoff-gebundenen Massen, für die Herstellung von Bauklebern, insbesondere Fliesenkleber und Vollwärmeschutzkleber, Putzen, Spachtelmassen, Fussbodenspachtelmassen, Verlaufsmassen, Dichtschlämmen, Fugenmörtel und Farben. Ferner als Bindemittel für Beschichtungsmittel und Klebemittel oder als Beschichtungs- und Bindemittel für Textilien, Fasern, Holz und Papier.

Die nachfolgenden Beispiele dienen der weiteren Erläuterung der Erfindung:

### Verwendete Dispersionen:

D1: Polyvinylalkohol-stabilisierte Terpolymerdispersion auf Basis Vinylacetat/Versaticsäurevinylester(VeoVa10)/Ethylen mit einer Glasübergangstemperatur von ca. 5°C und einem Festgehalt von 54 %.
D2: Polyvinylalkohol-stabilisierte Terpolymerdispersion auf Basis Vinylacetat/VeoVa10/Vinyllaurat mit einer Glasübergangstemperatur von ca. 15°C und einem Festgehalt von 53 %.
D3: Polyvinylalkoholstabilisierte Terpolymerdispersion auf Basis Vinylchlorid/Ethylen/Vinyllaurat mit einer Glasübergangstemperatur von ca. 1°C und einem Festgehalt von 50 %.

### Beispiel 1 (Vergleichsbeispiel):

100 Gew.Teile der Dispersion D1 wurden mit 8 Gew.Teilen eines Polyvinylalkohols mit einer Verseifungszahl von 140 bzw. einem Verseifungsgrad von 88 Mol-% versetzt und mit einer Zweistoffdüse verdüst (bei 4 bar und 125°C).
Das trockene Pulver wurde mit 15 Gew.Teilen eines kommerziell erhältlichen Antiblockmittels auf Basis Ca-Mg-Carbonat und Mg-Hydrosilikat abgemischt.

### Beispiel 1a (Vergleichsbeispiel):

100 Gew.Teile der Dispersion D1 wurden mit 8 Gew.Teilen eines Polyvinylalkohols mit einer Verseifungszahl von 140 bzw. einem Verseifungsgrad von 88 Mol-% versetzt, und mit 4 Gew.Teilen Isooctyltriethoxysilan versetzt, und mit einer Zweistoffdüse verdüst (bei 4 bar und 125°C).
Das trockene Pulver wurde mit 15 Gew.Teilen eines kommerziell erhältlichen Antiblockmittels auf Basis Ca-Mg-Carbonat und Mg-Hydrosilikat abgemischt.

### Beispiel 1b:

Zusätzlich zu den Komponenten des Beispiels 1a wurden 0.6 Gew.Teile eines natürlichen Esters aus Glycerin und gesättigten, vorwiegend aber ungesättigten, Fettsäuren mit überwiegend 12 bis 18 C-Atomen verwendet.
Das trockene Pulver wurde mit 15 Gew.Teilen eines kommerziell erhältlichen Antiblockmittels auf Basis Ca-Mg-Carbonat und Mg-Hydrosilikat abgemischt.

### Beispiel 1c (Vergleichsbeispiel):

100 Gew.Teile der Dispersion D1 wurden mit 6 Gew.Teilen eines Polyvinylalkohols mit einer Verseifungszahl von 140 bzw. einem Verseifungsgrad von 88 Mol-% und 0.6 Gew.Teilen eines natürlichen Triglycerides aus gesättigten, vorwiegend aber ungesättigten Fettsäuren mit überwiegend 12 bis 18 C-Atomen verdüst.

Das trockene Pulver wurde mit 15 Gew.Teilen eines kommerziell erhältlichen Antiblockmittels auf Basis Ca-Mg-Carbonat und Mg-Hydrosilikat abgemischt.

### Beispiel 2b:

100 Gew.Teile der Dispersion D1 wurden mit 6 Gew.Teilen eines Polyvinylalkohols mit einer Verseifungszahl von 140 bzw. einem Verseifungsgrad von 88 Mol-%, 4 Gew.Teilen Isooctyltriethoxysilan und 0.6 Gew.Teilen Diethylenglycolmonooleat verdüst.
Das trockene Pulver wurde mit 15 Gew.Teilen eines kommerziell erhältlichen Antiblockmittels auf Basis Ca-Mg-Carbonat und Mg-Hydrosilikat abgemischt.

### Beispiel 2c (Vergleichsbeispiel):

100 Gew.Teile der Dispersion D1 wurden mit 6 Gew.Teilen eines Polyvinylalkohols mit einer Verseifungszahl von 140 bzw. einem Verseifungsgrad von 88 Mol-% und 0.6 Gew.Teilen Diethylenglycolmonooleat verdüst.
Das trockene Pulver wurde mit 15 Gew.Teilen eines kommerziell erhältlichen Antiblockmittels auf Basis Ca-Mg-Carbonat und Mg-Hydrosilikat abgemischt.

### Beispiel 3b:

100 Gew.Teile der Dispersion D1 wurden mit 8 Gew.Teilen eines Polyvinylalkohols mit einer Verseifungszahl von 140 bzw. einem Verseifungsgrad von 88 Mol-%, 5 Gew.Teile Isooctyltriethoxysilan und 0.6 Gew.Teile eines Gemisches aus Laurinsäure- und Myristinsäuremethylester verdüst.
Das trockene Pulver wurde mit 15 Gew.Teile eines kommerziell erhältlichen Antiblockmittels auf Basis Ca-Mg-Carbonat und Mg-Hydrosilikat abgemischt.

### Beispiel 3c (Vergleichsbeispiel):

100 Gew.Teile der Dispersion D1 wurden mit 6 Gew.Teilen eines Polyvinylalkohols mit einer Verseifungszahl von 140 bzw. einem Verseifungsgrad von 88 Mol-% und 0.6 Gew.Teilen eines Gemisches aus Laurinsäuremethylester und Myristinsäuremethylester verdüst und wie oben beschrieben mit Antiblockmittel abgemischt.

### Beispiel 4b:

100 Gew.Teile der Dispersion D1 wurden mit 6 Gew.Teilen eines Polyvinylalkohols mit einer Verseifungszahl von 140 bzw. einem Verseifungsgrad von 88 Mol-%, 4 Gew.Teilen Isooctyltriethoxysilan und 0.6 Gew.Teilen Triethanolamindioleat verdüst und wie oben beschrieben mit Antiblockmittel abgemischt.

### Beispiel 5b:

100 Gew.Teile der Dispersion D1 wurden mit 6 Gew.Teilen eines Polyvinylalkohols mit einer Verseifungszahl von 140 bzw. einem Verseifungsgrad von 88 Mol-%, 4 Gew.Teilen Isooctyltriethoxysilan und 0.6 Gew.Teilen Laurinsäure verdüst und wie oben beschrieben mit Antiblockmittel abgemischt.

### Beispiel 6 (Vergleichsbeispiel):

100 Gew.Teile der Dispersion D2 wurden mit 6 Gew.Teilen eines Polyvinylalkohols mit einer Verseifungszahl von 140 bzw. einem Verseifungsgrad von 88 Mol-% verdüst und wie oben beschrieben mit Antiblockmittel abgemischt.

### Beispiel 6a (Vergleichsbeispiel):

100 Gew.Teile der Dispersion D2 wurden mit 6 Gew.Teilen eines Polyvinylalkohols mit einer Verseifungszahl von 140 bzw. einem Verseifungsgrad von 88 Mol-% und 4 Gew.Teilen Isooctyltriethoxysilan verdüst und wie oben beschrieben mit Antiblockmittel abgemischt.

### Beispiel 6b:

100 Gew.Teile der Dispersion D2 wurden mit 6 Gew.Teilen eines Polyvinylalkohols mit einer Verseifungszahl von 140 bzw. einem Verseifungsgrad von 88 Mol-%, 4 Gew.Teilen Isooctyltriethoxysilan und 4 Gew.Teilen Ölsäuremethylester verdüst und wie oben beschrieben mit Antiblockmittel abgemischt.

### Beispiel 6c (Vergleichsbeispiel):

100 Gew.Teile der Dispersion D2 wurden mit 6 Gew.Teilen eines Polyvinylalkohols mit einer Verseifungszahl von 140 bzw. einem Verseifungsgrad von 88 Mol-% und 4 Gew.Teilen Ölsäuremethylester verdüst und wie oben beschrieben mit Antiblockmittel abgemischt.

### Beispiel 7 (Vergleichsbeispiel):

100 Gew.Teile der Dispersion D3 wurden mit 10 Gew.Teilen eines Polyvinylalkohols mit einer Verseifungszahl von 140 bzw. einem Verseifungsgrad von 88 Mol-% verdüst und wie oben beschrieben mit Antiblockmittel abgemischt.

### Beispiel 7a (Vergleichsbeispiel):

100 Gew.Teile der Dispersion D3 wurden mit 10 Gew.Teilen eines Polyvinylalkohols mit einer Verseifungszahl von 140 bzw. einem Verseifungsgrad von 88 Mol-% und 4 Gew.Teilen Isooctyltriethoxysilan verdüst und wie oben beschrieben mit Antiblockmittel abgemischt.

### Beispiel 7b:

100 Gew.Teile der Dispersion D3 wurden mit 10 Gew.Teilen eines Polyvinylalkohols mit einer Verseifungszahl von 140 bzw. einem Verseifungsgrad von 88 Mol-%, 4 Gew.Teilen Isooctyltriethoxysilan und 4 Gew.Teilen Ölsäuremethylester verdüst und wie oben beschrieben mit Antiblockmittel abgemischt.

### Beispiel 7c (Vergleichsbeispiel):

100 Gew.Teile der Dispersion D3 wurden mit 10 Gew.Teilen eines Polyvinylalkohols mit einer Verseifungszahl von 140 bzw. einem Verseifungsgrad von 88 Mol-% und 4 Gew.Teilen Ölsäuremethylester verdüst und wie oben beschrieben mit Antiblockmittel abgemischt.

### Beispiel 8b:

95 Gew.Teile Dispersionspulver aus Beispiel 1a wurden trocken mit 5 Gew.Teilen pulverförmigem Natriumoleat im Pflugscharmischer abgemischt.

### Beispiel 8c (Vergleichsbeispiel):

95 Gew.Teile Dispersionspulver aus Beispiel 1 wurden trocken mit 5 Gew.Teilen pulverförmigem Natriumoleat im Pflugscharmischer abgemischt.

### Anwendungstechnische Prüfung:

Die hydrophobierende Wirkung der genannten Substanzen wurde mit einem Trockenmörtel mit folgender Zusammensetzung ermittelt:

| | | |
|---|---|---|
| 280.0 | Gew.Teile | Dyckerhoff Weißzement |
| 500.0 | Gew.Teile | Quarzsand (0.1 - 0.4 mm) |
| 190.0 | Gew.Teile | Juraperle MHS |
| 1.5 | Gew.Teile | Tylose MH 10001 P4 |
| X | Gew.Teile | Dispersionspulver |
| 24 | Gew.Teile | Wasser auf 100 Gew.Teile Trockenmischung |

### Prüfung der Wasseraufnahme:

Eine 4 mm dicke Mörtelschicht wurde auf Porenbeton aufgespachtelt. Die Proben wurden an den Seitenrändern abgedichtet und mit der Mörtelschicht nach unten ins Wasser eingetaucht. Aus der Gewichtszunahme pro Quadratmeter und der Zeit wurde dann die Wasseraufnahme in kg/m²h^{0,5} ermittelt.

Die Prüfergebnisse sind in den nachfolgenden Tabellen aufgelistet.

Die Beispiel X sind Vergleichsbeispiele ohne hydrophobierende Zusätze.
Die Beispiel Xa sind Vergleichsbeispiele, welche nur Silan als hydrophobierenden Zusatz enthalten.
Die Beispiele Xb sind erfindungsgemäß.
Die Beispiele Xc sind Vergleichsbeispiele, welche nur Fettsäure(-Derivate) als hydrophobierenden Zusatz enthalten.

Durch Silan (Beispiele Xa) läßt sich die Wasseraufnahme gegenüber nichtmodifizierten Pulvern (Beispiele X) deutlich reduzieren.
Weit weniger effektiv wirken Fettsäure(-Derivate) allein (Beispiele Xc).
Die Kombination Silan (Komponente a)) mit Fettsäure(-Derivat) (Komponente b)) zeigt eine synergetische Wechselwirkung zwischen den beiden Komponenten, da die Komponente b) allein zwar wesentlich schlechter wirkt als das Silan, aber in Kombination die hydrophobierende Wirkung des Silans deutlich erhöht.

Prüfergebnisse mit 7.5 Gew.Teilen Dispersionspulver in der Trockenmörtelrezeptur (Wasseraufnahme in kg/m²h^{0,5}):

| V.Bsp.6 | V.Bsp. 6a | Bsp. 6b | V.Bsp. 6c |
|---|---|---|---|
| 1.5 | 0.19 | 0.14 | 0.5 |
| | | | |

| V.Bsp. 7 | V.Bsp. 7a | Bsp. 7b | V.Bsp. 7c |
|---|---|---|---|
| 1.4 | 0.20 | 0.06 | 0.8 |

Prüfergebnisse mit 10 Gew.Teilen Dispersionspulver in der Trockenmörtelrezeptur (Wasseraufnahme in kg/m²h^{0,5}):

| V.Bsp. 1 | V.Bsp. 1a | Bsp. 8b | V.Bsp. 8c |
|---|---|---|---|
| 1.8 | 0.5 | 0.06 | 1.7 |

Prüfergebnisse mit 20 Gew.Teilen Dispersionspulver in der Trockenmörtelrezeptur (Wasseraufnahme in kg/m²h^{0,5}):

| V.Bsp. 1 | V.Bsp. 1a | Bsp. 1b | V.Bsp. 1c |
|---|---|---|---|
| 1.8 | 0.10 | 0.05 | 1.9 |
| | | | |
| | | Bsp. 2b | V.Bsp. 2c |
| | | 0.04 | 1.8 |
| | | | |
| | | Bsp. 3b | Bsp. 3c |
| | | 0.03 | 1.8 |
| | | | |
| | | Bsp. 4b | |
| | | 0.07 | |
| | | | |
| | | Bsp.5b | |
| | | 0.07 | |

## Patentansprüche

1. Hydrophob modifizierte Polymerzusammensetzung mit mindestens einem Polymerisat auf der Basis von einem oder mehreren ethylenisch ungesättigten Monomeren, in Form deren wässrigen Polymerdispersionen und in Wasser redispergierbaren Polymerpulver, **dadurch gekennzeichnet, dass** die Polymerzusammensetzung noch
a) ein oder mehrere Organosilicium-Verbindungen aus der Gruppe der Silane, Polysilane, Oligosiloxane, Polysiloxane, Carbosilane, Polycarbosilane, Carbosiloxane, Polycarbosiloxane, Polysilylendisiloxane, und
b) ein oder mehrere Verbindungen aus der Gruppe der Fettsäuren mit 8 bis 22 C-Atomen, deren Metallseifen, deren Amide, sowie deren Ester mit einwertigen Alkoholen mit 1 bis 8 C-Atomen, mit Glykol, mit Polyglykol, mit Polyalkylenglykol, mit Glycerin, mit Mono-, Di- oder Triethanolamin, mit Monosacchariden, enthält.

2. Hydrophob modifizierte Polymerzusammensetzung nach Anspruch 1, wobei als Komponente a) ein oder mehrere Verbindungen enthalten sind aus der Gruppe umfassend Kieselsäureester Si(OR')₄, Tetraorganosilane SiR₄, Organoorganoxysilane SiRₙ(OR')₄₋ₙ mit n = 1 bis 3, Polysilane der allgemeinen Formel R₃Si(SiR₂)ₙSiR₃ mit n = 0 bis 500, Organosilanole SiRₙ(OH)₄₋ₙ, Di-, Oligo- und Polysiloxane aus Einheiten der allgemeinen Formel R_{c}H_{d}Si(OR')ₑ(OH)_{f}O_{(4-c-d-e-f)/2} mit c = 0 bis 3, d = 0 bis 1, e = 0 bis 3, f = 0 bis 3 und die Summe c+d+e+f je Einheit höchstens 3.5 ist, wobei R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, wobei die Reste R und R' auch mit Halogenen wie F und Cl, mit Ether-, Thioether-, Ester-, Amid-, Nitril-, Hydroxyl-, Amin-, Carboxyl-, Sulfonsäure-, Carbonsäureanhydrid- und Carbonyl-Gruppen substituiert sein können, und wobei im Fall der Polysilane R auch die Bedeutung OR' haben kann.

3. Hydrophob modifizierte Polymerzusammensetzung nach Anspruch 1 oder 2, wobei als Komponente b) ein oder mehrere Verbindungen enthalten sind aus der Gruppe umfassend verzweigte und unverzweigte, gesättigte und ungesättigte Fettsäuren mit jeweils 8 bis 22 C-Atomen,
Metallseifen der C₈- bis C₂₂-Fettsäuren mit Metallen der 1. bis 3. Hauptgruppe des PSE,
Fettsäureamide des Mono-, Di- und Triethanolamins mit den C₈- bis C₂₂-Fettsäuren,
C₁- bis C₈-Alkylester der C₈- bis C₂₂-Fettsäuren,
Mono- und Diglykolester der C₈- bis C₂₂-Fettsäuren,
Mono- und Diester der C₈- bis C₂₂-Fettsäuren von Polyglykolen und/oder Polyalkylenglykolen mit bis zu 12 Oxyalkylen-Einheiten,
Mono-, Di- und Tri-Fettsäureester des Glycerins mit den C₈bis C₂₂-Fettsäuren,
die Mono-, Di- und Tri-Fettsäureester von Mono-, Di- und Triethanolamin mit den C₈- bis C₂₂-Fettsäuren,
die Fettsäureester von Sorbit und Mannit mit den C₈- bis C₂₂-Fettsäuren.

4. Hydrophob modifizierte Polymerzusammensetzung nach Anspruch 3, wobei als Komponente b) ein oder mehrere Verbindungen enthalten sind aus der Gruppe umfassend ungesättigte Fettsäuren mit jeweils 8 bis 22 C-Atomen, deren Metallseifen mit Metallen der 1. bis 3. Hauptgruppe des PSE, deren Fettsäureamide mit Diethanolamin, deren C₁- bis C₈-Alkylester, deren Mono- und Diglykolester, deren Mono- und Diester mit Polyglykolen und/oder Polyalkylenglykolen mit bis zu 12 Oxyalkylen-Einheiten, deren Mono-, Di- und Tri-Fettsäureester mit Glycerins, sowie deren Mono-, Di- und Tri-Fettsäureester mit Triethanolamin.

5. Hydrophob modifizierte Polymerzusammensetzung nach Anspruch 1 bis 4, mit mindestens einem Polymerisat auf der Basis von einem oder mehreren ethylenisch ungesättigten Monomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, Diene, Olefine, Vinylaromaten und Vinylhalogenide.

6. Hydrophob modifizierte Polymerzusammensetzung nach Anspruch 5, mit mindestens einem Polymerisat aus der Gruppe umfassend
Polymerisate von Vinylacetat, gegebenenfalls mit Ethylen, Polymerisate von Vinylacetat, Ethylen und einem Vinylester von α-verzweigten Monocarbonsäuren mit 9 bis 13 C-Atomen, Polymerisate von n-Butylacrylat mit 2-Ethylhexylacrylat und/oder Methylmethacrylat,
Polymerisate von Styrol mit einem oder mehreren Monomeren. aus der Gruppe Methylacrylat, Ethylacrylat, Propylacrylat, n-Butylacrylat, 2-Ethylhexylacrylat, 1,3-Butadien, Polymerisate von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen, wobei die genannten Polymerisate gegebenenfalls noch ein oder mehrere der obengenannten Hilfsmonomereinheiten enthalten können.

7. Verfahren zur Herstellung der hydrophob modifizierten Polymerzusammensetzungen nach Anspruch 1 bis 6, nach dem Emulsionspolymerisationsverfahren oder nach dem Suspensionspolymerisationsverfahren, in Gegenwart von Schutzkolloiden und/oder Emulgatoren, und gegebenenfalls Trocknung der damit erhältlichen Polymerdispersionen, wobei die hydrophobierenden Komponenten a) und b) während der Polymerisation zugegeben werden, oder erst nach der Polymerisation zur Polymerdispersion gegeben werden, und zur Hydrophobierung von pulverförmigen Zusammensetzungen auch so vorgegangen wird, dass die Komponenten a) und b) in Pulverform während oder nach der Trocknung dem Polymerpulver zugegeben werden.

8. Verwendung der hydrophob modifizierten Polymerzusammensetzungen nach Anspruch 1 bis 6 in bauchemischen Produkten, gegebenenfalls in Verbindung mit hydraulisch abbindenden Bindemitteln wie Zementen oder Wasserglas, oder in Gipshaltigen Massen, oder Kalk-haltigen Massen, oder zementfreien und Kunststoff-gebundenen Massen.

9. Verwendung gemäß Anspruch 8 in Bauklebern, Putzen, Spachtelmassen, Fussbodenspachtelmassen, Verlaufsmassen, Dichtschlämmen, Fugenmörtel und Farben.

10. Verwendung der hydrophob modifizierten Polymerzusammensetzungen nach Anspruch 1 bis 6 als Bindemittel für Beschichtungsmittel und Klebemittel.

11. Verwendung der hydrophob modifizierten Polymerzusammensetzungen nach Anspruch 1 bis 6 als Beschichtungs- und Bindemittel für Textilien, Fasern, Holz und Papier.

## Claims

1. Hydrophobically modified polymer composition with at least one polymer based on one or more ethylenically unsaturated monomers, in the form of their aqueous polymer dispersions and water-redispersible polymer powders, **characterized in that** the polymer composition also comprises
a) one or more organosilicon compounds from the group of the silanes, polysilanes, oligosiloxanes, polysiloxanes, carbosilanes, polycarbosilanes, carbosiloxanes, polycarbosiloxanes, polysilylenedisiloxanes, and
b) one or more compounds from the group of the fatty acids having from 8 to 22 carbon atoms, their metal soaps, their amides, and also their esters with monohydric alcohols having from 1 to 8 carbon atoms, with glycol, with polyglycol, with polyalkylene glycol, with glycerol, with mono-, di-, or triethanolamine, or with monosaccharides.

2. Hydrophobically modified polymer composition according to Claim 1, where the component a) present comprises one or more compounds from the group consisting of silicic esters Si(OR')₄, tetraorganosilanes SiR₄, organoorganoxysilanes SiRₙ(OR')₄₋ₙ, where n = from 1 to 3, polysilanes of the general formula R₃Si(SiR₂)ₙSiR₃, where n = from 0 to 500, organosilanols SiRₙ(OH)₄₋ₙ, di-, oligo-, and polysiloxanes composed of units of the general formula
R_{c}H_{d}Si(OR')ₑ(OH)_{f}O_{(4-c-d-e-f)/2}, where c = from 0 to 3, d = from 0 to 1, e = from 0 to 3, f = from 0 to 3 and c+d+e+f is not more than 3.5 per unit, where R is identical or different and is branched or unbranched alkyl radicals having from 1 to 22 carbon atoms, cycloalkyl radicals having from 3 to 10 carbon atoms, alkylene radicals having from 2 to 4 carbon atoms, or else aryl, aralkyl, or alkylaryl radicals having from 6 to 18 carbon atoms, and
R' is identical or different alkyl radicals and
alkoxyalkylene radicals each having from 1 to 4 carbon atoms, and where the radicals R and R' may also have substitution by halogens, such as F and Cl, by ether, thioether, ester, amide, nitrile, hydroxy, amine, carboxy, sulphonic acid, carboxylic anhydride, or carbonyl groups, and where in the case of the polysilanes R can also have the meaning OR'.

3. Hydrophobically modified polymer composition according to Claim 1 or 2, where the component b) present comprises one or more compounds from the group consisting of branched and unbranched, saturated and unsaturated fatty acids each having from 8 to 22 carbon atoms,
metal soaps of the C₈-C₂₂ fatty acids with metals of the 1st to 3rd main group of the PTE,
amides of mono-, di-, or triethanolamine with the C₈-C₂₂ fatty acids,
C₁-C₈-alkyl esters of the C₈-C₂₂ fatty acids,
mono- and diglycol esters of the C₈-C₂₂ fatty acids,
mono- and diesters of the C₈-C₂₂ fatty acids with polyglycols and/or with polyalkylene glycols having up to 12 oxyalkylene units,
mono-, di-, and triesters of glycerol with the C₈-C₂₂ fatty acids,
the mono-, di-, and triesters of mono-, di-, or triethanolamine with the C₈-C₂₂ fatty acids,
the esters of sorbitol and mannitol with the C₈-C₂₂ fatty acids.

4. Hydrophobically modified polymer composition according to Claim 3, where the component b) present comprises one or more compounds from the group consisting of unsaturated fatty acids each having from 8 to 22 carbon atoms, their metal soaps with the metals of the 1st to 3rd main group of the PTE, their amides with diethanolamine, their C₁-C₈-alkyl esters, their mono- and diglycol esters, their mono- and diesters with polyglycols and/or with polyalkylene glycols having up to 12 oxyalkylene units, their mono-, di-, and triesters with glycerol, and their mono-, di-, and triesters with triethanolamine.

5. Hydrophobically modified polymer composition according to any of Claims 1 to 4 with at least one polymer based on one or more ethylenically unsaturated monomers from the group consisting of vinyl esters of unbranched or branched alkylcarboxylic acids having from 1 to 18 carbon atoms, acrylic or methacrylic esters of branched or unbranched alcohols or of diols having from 1 to 18 carbon atoms, and dienes, olefins, vinylaromatics, and vinyl halides.

6. Hydrophobically modified polymer composition according to Claim 5 with at least one polymer from the group consisting of
polymers of vinyl acetate, where appropriate with ethylene,
polymers of vinyl acetate, ethylene, and a vinyl ester of α-branched monocarboxylic acids having from 9 to 13 carbon atoms,
polymers of n-butyl acrylate with 2-ethylhexyl acrylate and/or methyl methacrylate,
polymers of styrene with one or more monomers from the group consisting of methyl acrylate, ethyl acrylate, propyl acrylate, n-butyl acrylate, 2-ethylhexyl acrylate, 1,3-butadiene,
polymers of vinyl acetate with one or more monomers from the group consisting of methyl acrylate, ethyl acrylate, propyl acrylate, n-butyl acrylate, 2-ethylhexyl acrylate, and, where appropriate, ethylene, where the polymers mentioned may, where appropriate, also contain one or more of the abovementioned auxiliary monomer units.

7. Process for preparing the hydrophobically modified polymer compositions according to any of Claims 1 to 6 by the emulsion polymerization process or by the suspension polymerization process, in the presence of protective colloids and/or of emulsifiers, and, where appropriate, drying the resultant polymer dispersions, where the hydrophobicizing components a) and b) are added during the polymerization, or are added to the polymer dispersion after the polymerization has ended, and, in another procedure for hydrophobicizing pulverulent compositions, components a) and b) are added in powder form to the polymer powder during or after the drying process.

8. Use of the hydrophobically modified polymer compositions according to any of Claims 1 to 6 in chemical products for the construction industry, where appropriate combined with hydraulically setting binders, such as cements or water glass, or in gypsum-containing compositions, or in lime-containing compositions, or in cement-free, polymer-bound compositions.

9. Use according to Claim 8 in construction adhesives, plasters and renderings, trowelling compositions, floor-filling compositions, self-levelling compositions, sealing slurries, jointing mortars, or paints.

10. Use of the hydrophobically modified polymer compositions according to any of Claims 1 to 6 as binders for coating compositions or adhesive compositions.

11. Use of the hydrophobically modified polymer compositions according to any of Claims 1 to 6 as agents for the coating or binding of textiles, fibres, wood, or paper.

## Revendications

1. Composition polymère à modification hydrophobe comprenant au moins un polymère à base d'un ou de plusieurs monomères éthyléniquement insaturés, sous forme de leurs dispersions polymères aqueuses et de leurs poudres polymères redispersables dans l'eau, **caractérisée en ce que** la composition polymère comprend également
a) un ou plusieurs composés organosiliciés parmi le groupe constitué des silanes, des polysilanes, des oligosiloxanes, des polysiloxanes, des carbosilanes, des polycarbosilanes, des carbosiloxanes, des polycarbosiloxanes, des polysilylènedisiloxanes, et
b) un ou plusieurs composés parmi le groupe des acides gras ayant de 8 à 22 atomes de carbone, de leurs savons métalliques, de leurs amides, ainsi que de leurs esters avec des alcools monohydriques ayant de 1 à 8 atomes de carbone, avec le glycol, avec le polyglycol, avec le polyalkylèneglycol, avec le glycérol, avec la mono-, la di- ou la triéthanolamine, ou avec des monosaccharides.

2. Composition polymère à modification hydrophobe selon la revendication 1, dans laquelle, en tant que composant a), sont présents un ou plusieurs composés parmi le groupe constitué d'esters siliciques Si(OR')₄, de tétraorganosilanes SiR₄, d'organo-organoxysilanes SiRₙ(OR')₄₋ₙ avec n = de 1 à 3, de polysilanes de formule générale R₃Si(SiR₂)ₙSiR₃ avec n = de 0 à 500, d'organosilanols SiRₙ(OH)₄₋ₙ, de di-, d'oligo- et de polysiloxanes composés de motifs de formule générale R_{c}H_{d}Si(OR')ₑ(OH)_{f}O_{(4-c-d-e-f)/2} avec c = de 0 à 3, d = de 0 à 1, e = de 0 à 3, f = de 0 à 3 et la somme c + d + e + f vaut au plus 3,5 pour chaque motif, où R est identique ou différent et représente des radicaux alkyle ramifiés ou non ramifiés ayant de 1 à 22 atomes de carbone, des radicaux cycloalkyle ayant de 3 à 10 atomes de carbone, des radicaux alkylène ayant de 2 à 4 atomes de carbone, ainsi que des radicaux aryle, aralkyle ou alkylaryle ayant de 6 à 18 atomes de carbone, et R' représente des radicaux alkyle et des radicaux alcoxyalkylène identiques ou différents ayant chacun de 1 à 4 atomes de carbone, où les radicaux R et R' peuvent également être substitués par des halogènes tels que F et C1, par des groupes éther, thioéther, ester, amide, nitrile, hydroxy, amine, carboxy, acide sulfonique, anhydride carboxylique et carbonyle, et où, dans le cas des polysilanes, R peut également représenter OR'.

3. Composition polymère à modification hydrophobe selon la revendication 1 ou 2, dans laquelle, en tant que composant b), sont présents un ou plusieurs composés parmi le groupe constitué d'acides gras saturés et insaturés, ramifiés et non ramifiés, ayant chacun de 8 à 22 atomes de carbone, de savons métalliques des acides gras en C₈ à C₂₂ avec des métaux du 1er au 3ème groupe principal du TPE,
d'amides gras de la mono-, de la di- et de la triéthanolamine avec les acides gras en C₈ à C₂₂, d'esters C₁₋₈-alkyliques des acides gras en C₈ à C₂₂, d'esters mono- et diglycoliques des acides gras en C₈ à C₂₂,
de mono- et de diesters des acides gras en C₈ à C₂₂ et de polyglycols et/ou de polyalkylèneglycols ayant jusqu'à 12 motifs oxyalkylène,
de mono-, de di- et de triesters d'acides gras du glycérol avec les acides gras en C₈ à C₂₂,
de mono-, de di- et de triesters de la mono-, de la di- et de la triéthanolamine avec les acides gras en C₈ à C₂₂,
d'esters d'acides gras du sorbitol et du mannitol avec les acides gras en C₈ à C₂₂.

4. Composition polymère à modification hydrophobe selon la revendication 3, dans laquelle, en tant que composant b), sont présents un ou plusieurs composés parmi le groupe constitué d'acides gras insaturés ayant chacun de 8 à 22 atomes de carbone, de leurs savons métalliques avec des métaux du 1er au 3ème groupe principal du TPE, de leurs amides gras avec la diéthanolamine, de leurs esters C₁₋₈-alkyliques, de leurs esters mono- et diglycoliques, de leurs mono- et diesters avec des polyglycols et/ou des polyalkylèneglycols ayant jusqu'à 12 motifs oxyalkylène, de leurs mono-, di- et triesters d'acides gras avec le glycérol, ainsi que de leurs mono-, di- et triesters d'acides gras avec la triéthanolamine.

5. Composition polymère à modification hydrophobe selon les revendications 1 à 4, comprenant au moins un polymère à base d'un ou de plusieurs monomères éthyléniquement insaturés parmi le groupe constitué d'esters vinyliques d'acides alkylcarboxyliques non ramifiés ou ramifiés ayant de 1 à 18 atomes de carbone, d'esters acryliques ou d'esters méthacryliques d'alcools ramifiés ou non ramifiés ou de diols ayant de 1 à 18 atomes de carbone, de diènes, d'oléfines, de composés vinylaromatiques et d'halogénures de vinyle.

6. Composition polymère à modification hydrophobe selon la revendication 5, comprenant au moins un polymère parmi le groupe constitué
de polymères d'acétate de vinyle, éventuellement avec de l'éthylène,
de polymères d'acétate de vinyle, d'éthylène et d'un ester vinylique d'acides monocarboxyliques ramifiés en α ayant de 9 à 13 atomes de carbone,
de polymères d'acrylate de n-butyle avec de l'acrylate de 2-éthylhexyle et/ou du méthacrylate de méthyle,
de polymères de styrène avec un ou plusieurs monomères parmi le groupe constitué de l'acrylate de méthyle, de l'acrylate d'éthyle, de l'acrylate de propyle, de l'acrylate de n-butyle, de l'acrylate de 2-éthylhexyle, du 1,3-butadiène, de polymères d'acétate de vinyle avec un ou plusieurs monomères parmi le groupe constitué de l'acrylate de méthyle, de l'acrylate d'éthyle, de l'acrylate de propyle, de l'acrylate de n-butyle, de l'acrylate de 2-éthylhexyle et éventuellement de l'éthylène, où les polymères mentionnés peuvent éventuellement renfermer également un ou plusieurs des motifs monomères auxiliaires susmentionnés.

7. Procédé de préparation des compositions polymères à modification hydrophobe selon les revendications 1 à 6, conformément au procédé de polymérisation en émulsion ou conformément au procédé de polymérisation en suspension, en présence de colloïdes protecteurs et/ou d'émulsifiants, et éventuellement par séchage des dispersions polymères ainsi obtenues, où les composants hydrophobisants a) et b) sont ajoutés durant la polymérisation, ou ne sont ajoutés à la dispersion polymère qu'après la polymérisation, et pour l'hydrophobisation de compositions pulvérulentes, on procède également en ajoutant les composants a) et b) sous forme pulvérulente durant ou après le séchage de la poudre polymère.

8. Utilisation des compositions polymères à modification hydrophobe selon les revendications 1 à 6 dans des produits chimiques de construction, éventuellement en association avec des liants à prise hydraulique tels que des ciments ou du verre soluble, ou dans des compositions contenant du gypse, ou dans des compositions contenant de la chaux, ou dans des compositions exemptes de ciments et liées à une matière plastique.

9. Utilisation selon la revendication 8 dans des adhésifs de construction, des crépis, des mastics, des mastics pour planchers, des compositions d'égalisation, des coulis d'étanchéité, des mortiers de joints et des peintures.

10. Utilisation de la composition polymère à modification hydrophobe selon les revendications 1 à 6 en tant que liants pour des compositions de revêtements et des adhésifs.

11. Utilisation de la composition polymère à modification hydrophobe selon les revendications 1 à 6 en tant que compositions de revêtements et liants pour des textiles, des fibres, du bois et du papier.
